# NEUE EUROPÄISCHE PATENTSCHRIFT

(11) **EP 2 066 717 B2**
(45) Veröffentlichungstag und Bekanntmachung des Hinweises auf die Entscheidung über den Einspruch: **20.11.2013**
(45) Hinweis auf die Patenterteilung: 18.11.2009
(21) Anmeldenummer: 07803299.2
(22) Anmeldetag: 06.09.2007
(51) Int. Cl.: C08G 18/40, C08G 18/48, C08G 18/63, C08G 18/81

(54) **VERFAHREN ZUR HERSTELLUNG VON POLYURETHAN-HARTSCHAUMSTOFFEN**
METHOD FOR THE PRODUCTION OF RIGID POLYURETHANE FOAM
PROCÉDÉ DE PRODUCTION DE MOUSSES DURES EN POLYURÉTHANE

(30) Priorität: 15.09.2006 EP 06120725
(43) Veröffentlichungstag der Anmeldung: 10.06.2009
(73) Patentinhaber: BASF SE, 67056 Ludwigshafen (DE)
(72) Erfinder: EMGE, Andreas, 49448 Lemförde (DE); FREIDANK, Daniel, 67063 Ludwigshafen (DE); SEIFERT, Holger, 49163 Bohmte (DE)
(74) Vertreter: Schuck, Alexander
(86) Internationale Anmeldenummer: PCT/EP2007/059345
(87) Internationale Veröffentlichungsnummer: WO 2008/031757

(56) Entgegenhaltungen:
- EP-A- 0 316 788
- EP-A1- 1 624 004
- EP-A1- 1 624 005
- EP-A2- 0 190 769
- EP-A2- 0 262 653
- WO-A-2005/097863
- WO-A1-00//00531
- WO-A1-03//078496
- WO-A1-2004//035650
- WO-A1-2005//097863
- WO-A1-2007//142822
- GB-A- 1 559 121
- US-A- 4 242 249
- US-A1-2006/0 025 491
- DR. G. OERTEL ET AL: '"Polyurethane" Kunststoff Handbuch', Bd. 7, teil 3 1993, CARL HANSER VERLAG, MÜNCHEN WIEN Seiten 23 - 59
- DR. G. BAATZ ET AL.: '"Polyurethane" Kunststoffhandbuc', Bd. 7, teil 3 1993, CARL HANSER VERLAG, MÜNCHEN WIEN Seiten 193 - 265

## Beschreibung

Gegenstand der Erfindung ist ein Verfahren zur Herstellung von Polyurethan-Hartschaumstoffen durch Umsetzung von Polyisocyanaten mit Verbindungen mit mindestens zwei mit Isocyanatgruppen reaktiven Wasserstoffatomen.

Polyurethan-Hartschaumstoffe sind seit langem bekannt und vielfach in der Literatur beschrieben. Ihre Herstellung erfolgt üblicherweise durch Umsetzung von Polyisocyanaten mit Verbindungen mit mindestens zwei mit Isocyanatgruppen reaktiven Wasserstoffatomen, insbesondere mehrfunktionellen Alkoholen, ist seit langem bekannt und vielfach in der Literatur beschrieben. Die Polyurethan-Hartschaumstoffe werden vorzugsweise zur Dämmung in Kältegeräten oder für Bauelemente eingesetzt.

Es ist eine ständige Aufgabe, die Eigenschaften der Polyurethan-Hartschaumstoffe zu verbessern. Insbesondere sollten die Wärmeleitfähigkeit und die Entformzeit verkürzt sowie die Verarbeitbarkeit der Aufbaukomponenten für die Polyurethan-Hartschaumstoffe, insbesondere die Verträglichkeit mit den Treibmitteln, ständig gewährleistet werden.

Es hat sich gezeigt, dass durch den Einsatz von Polyetheralkohole, die durch in-situ Polymerisation von olefinisch ungesättigten Monomeren, insbesondere Styrol und Acrylnitril, hergestellt werden, die Entformbarkeit der Polyurethan-Hartschaumstoffe verbessert werden kann. Derartige Polyole werden in der Technik häufig auch als Graft-Polyole bezeichnet.

So beschreibt WO 2004/035650 ein Verfahren zur Herstellung von Polyurethan-Hartschaumstoffen unter Verwendung von Graft-Polyolen. Die dort beschriebenen Graft-Polyole werden unter Verwendung von 2 - 8-funktionellen Polyetheralkoholen und Styrol und Acrylnitril bevorzugt in einem Gewichtsverhältnis von 2:1 hergestellt und im Gemisch mit anderen Polyolen, beispielsweise auf Basis von Zucker und von aromatischen Aminen, wie Toluylendiamin, zur Herstellung der Polyurethan-Hartschaumstoffe eingesetzt. Die dort beschriebenen Hartschaumstoffe zeichnen sich durch eine gute Aushärtung und Entformbarkeit und gutes Fließverhalten aus. Nachteilig ist jedoch die unzureichende Mischbarkeit der Graftpolyole mit Polyolen und den Treibmitteln sowie die geringe Lagerstabilität der Polyolkomponente, insbesondere bei Verwendung von Kohlenwasserstoffen.

In WO 2005/097863 wird ein Verfahren zur Herstellung von Polyurethan-Hartschaumstoffen unter Verwendung von Graft-Polyolen beschrieben, die unter Verwendung von Polyetheralkoholen mit einem hohen Anteil von Ethylenoxid in der Kette hergestellt wurden. Dadurch sollte die Verträglichkeit mit den Polyolen der Formulierung verbessert werden.

In EP 1 108 514 wird ein Verfahren zur Herstellung von Hartschaumpaneelen beschrieben, bei dem ein Graft-Polyol verwendet wird. Dieser wird unter Verwendung einer Polyolmischung hergestellt, die einen Polyetheralkohol mit einem Gehalt an Ethylenoxid von mindestens 40 Gew.-% aufweist. Diese Schaumstoffe sollten einen verringerten Schrumpf aufweisen.

JP 2000 169541 beschreibt Polyurethan-Hartschaumstoffe mit einer verbesserten mechanischen Festigkeit und einem geringen Schrumpf. Zu deren Herstellung wurde ein ausschließlich unter Verwendung von Acrylnitril als Monomer hergestellter Graft-Polyol eingesetzt.

Auch in JP 11060651 wird ein Verfahren zur Herstellung von Polyurethan-Hartschaumstoffen unter Verwendung von Graft-Polyolen beschrieben, zu deren Herstellung ein Polyetheralkohol mit einem Gehalt von mindestens 40 Gew.-% Ethylenoxid eingesetzt wird.

Die Verwendung so hoher Mengen an Ethylenoxid in den Graft-Polyolen hat jedoch auch Nachteile. So ist die Löslichkeit der üblicherweise als Treibmittel verwendeten Kohlenwasserstoffe in derartigen Polyolen schlechter. Weiterhin weisen derartige Polyole eine erhöhte Eigenreaktivität auf. Dies verringert die Möglichkeiten, mittels Katalysatoren die Polyurethanbildung zu steuern.

In EP 1 108 514 werden Formulierungen aus Polyolen beschrieben, die bei einem Gehalt an Ethylenoxid von unter 20 Gew.-% keine phasenstabile Polyol-Komponente mit Graftpolyolen ergeben.

Es war Aufgabe der vorliegenden Erfindung, ein Verfahren zur Herstellung von Polyurethan-Hartschaumstoffen zu entwickeln, die eine kurze Entformzeit, gute mechanische Eigenschaften und eine geringe Wärmeleitfähigkeit und die ohne Probleme herstellbar sind, wobei insbesondere eine gute Phasenstabilität der Polyolkomponente einschließlich Treibmittel besteht.

Die Aufgabe konnte gelöst werden, indem eine Polyolkomponente eingesetzt wird, die ein Graft-Polyol enthält, das eine Funktionalität von 2 bis 4 und eine Hydroxylzahl im Bereich zwischen 100 und 250 mgKOH/g aufweist, seine Polyetherkette aus Propylenoxid und bis zu 20 Gew.-%, bezogen auf den Polyetheralkohol b1i), Ethylenoxid aufgebaut ist, und als olefinisch ungesättigte Monomere Acrylnitril und Styrol in einem Verhältnis von Acrylnitril : Styrol von > 1 : 1 bis 4 : 1 eingesetzt werden, und die Umsetzung in Anwesenheit mindestens einer im Polyetheralkohol b1i) mischbare Verbindung mit mindestens einer olefinischen Doppelbindung durchgeführt wird.

Gegenstand der Erfindung ist demzufolge ein Verfahren zur Herstellung von Polyurethan-Hartschaumstoffen durch Umsetzung von
a) Polyisocyanaten mit
b) Verbindungen mit mindestens zwei mit Isocyanatgruppen reaktiven Wasserstoffatomen in Gegenwart von
c) Treibmitteln,
dadurch gekennzeichnet, dass als Verbindungen mit mindestens zwei mit Isocyanatgruppen reaktiven Wasserstoffatomen b) mindestens ein Graft-Polyol b1) eingesetzt wird, der herstellbar ist durch in-situ Polymerisation von olefinisch ungesättigten Monomeren in einem Polyetheralkohol b1i), wobei der Polyetheralkohol b1i) eine Funktionalität von 2 bis 4 und eine Hydroxylzahl im Bereich zwischen 100 und 250 mgKOH/g aufweist, seine Polyetherkette aus Propylenoxid und bis zu 20 Gew.-%, bezogen auf den Polyetheralkohol b1i), Ethylenoxid aufgebaut ist, und als olefinisch ungesättigte Monomere Acrylnitril und Styrol in einem Verhältnis von Acrylnitril : Styrol von > 1 : 1 bis 4 : 1 eingesetzt werden, und die Umsetzung in Anwesenheit mindestens einer im Polyetheralkohol b1i) mischbare Verbindung mit mindestens einer olefinischen Doppelbindung durchgeführt wird.

Gegenstand der Erfindung sind weiterhin die nach diesem Verfahren hergestellten Polyurethan-Hartschaumstoffe.

Die Graft-Polyole b1) werden, wie beschrieben, durch in-situ Polymerisation von olefinisch ungesättigten Monomeren in Polyetheralkoholen b1i), im folgenden auch als Carrier-Polyole bezeichnet, in Anwesenheit mindestens einer im Polyetheralkohol b1i) mischbare Verbindung mit mindestens einer olefinischen Doppelbindung, im folgenden auch als Makromer bezeichnet, durchgeführt wird

Die Graft-Polyle weisen vorzugsweise eine Hydroxylzahl im Bereich zwischen von 40-150 mgKOH/g auf.

Als Carrier-Polyole b1i) werden vorzugsweise solche mit einer Funktionalität von 2 bis 4, insbesondere von 3 bis 4, eingesetzt. Sie werden üblicherweise hergestellt durch Anlagerung von Alkylenoxiden, insbesondere Propylenoxid oder Gemischen aus Propylenoxid und Ethylenoxid mit maximal 20 Gew.-%, bezogen auf das Gewicht des Polyetheralkohols b1i), Ethylenoxid an H-funktionelle Startsubstanzen. Die Startsubstanzen sind zumeist Alkohole oder Amine mit der entsprechenden Funktionalität. Bevorzugt eingesetzte Startsubstanzen sind Ethylenglykol, Propylenglykol, Glyzerin, Trimethylolpropan, Ethylendiamin und Toluylendiamin (TDA). Die Carrier-Polyole werden nach den üblichen und bekannten Verfahren zur Herstellung von Polyetheralkoholen hergestellt, die unten näher beschrieben sind.

Die Carrier-Polyole werden vorzugsweise einzeln eingesetzt, es ist jedoch auch möglich, diese in Form von beliebigen Gemischen untereinander einzusetzen.

Die Polymerisation von olefinisch ungesättigten Monomeren in Polyetheralkoholen b1i) wird in Anwesenheit von mindestens einer im Polyetheralkohol b1i) mischbaren Verbindung mit mindestens einer olefinischen Doppelbindung b1i), auch als Makromere oder Stabilisatoren bezeichnet, durchgeführt. Die Makromere sind lineare oder verzweigte Polyetheralkohole mit Molekulargewichten ≥ 1000 g/mol, die mindestens eine endständige, reaktionsfähige olefinisch ungesättigte Gruppe enthalten. Die olefinisch ungesättigte Gruppe kann über eine Reaktion mit Carbonsäure-Anhydriden, wie Maleinsäureanhydrid (MSA), Fumarsäure, Acrylat- und Methacrylat-Derivaten sowie Isocyanat-Derivaten,wie 3-Isopropenyl-1,1-dimethylbenzyl-isocyanate (TMI), Isocyanatoethylmethacrylate, an ein bereits bestehendes Polyol b1i) eingefügt werden. Ein weiterer Weg ist die Herstellung eines Polyols durch Alkoxydation von Propylenoxid und Ethylenoxid unter Verwendung von Startmolekülen mit Hydroxylgruppen und einer olefinischen Ungesättigtheit. Beispiele für solche Makromere sind beispielsweise in US 4,390,645, US 5,364,906, EP 0 461 800 und US 6,013,731 beschrieben. Sie müssen im Carrier-Polyol löslich sein. Die Makromere haben vorzugsweise ein Molekulargewicht von 300 bis 30000 g/mol.

Bevorzugt sind die Polyole b1i) Polyetheralkohole, die durch Anlagerung von Alkylenoxiden an H-funktionelle Startsubstanzen, insbesondere mehrfunktionelle, insbesondere 2- bis 8-funktionelle Alkohole. Beispiele hierfür sind Ethylenglykol, Propylenglykol, Glyzerin, Trimethylolpropan, Sorbit und Saccharose. In einer besonders bevorzugten Ausführungsform wird als Startsubstanz Sorbit oder Saccharose eingesetzt. Diese Polyole werden besonders bevorzugt mit MSA bzw. TMI umgesetzt zum Makromer.

Während der radikalischen Polymerisation werden die Makromere mit in die Copolymerkette eingebaut. Dadurch bilden sich Blockcopolymere mit einem Polyether- und einen Poly-acrylnitril-styren-Block, welche in der Grenzfläche von kontinuierlicher Phase und dispergierter Phase als Phasenvermittler wirken und das Agglomerieren der Graftpolyolpartikel unterdrücken. Der Anteil der Makromere beträgt üblicherweise 1 bis 15 Gew.-%, bezogen auf das Gesamtgewicht der zur Herstellung des Graftpolyols eingesetzten Monomere.

Zur Herstellung von Graftpolyolen werden üblicherweise Moderatoren, auch als Kettenüberträger bezeichnet, eingesetzt. Der Einsatz und die Funktion dieser Moderatoren wird beispielsweise in US 4,689,354, EP 0 365 986, EP 0 510 533 und EP 0 640 633, beschrieben. Die Moderatoren verringern durch Kettenübertragung des wachsenden Radikals das Molekulargewicht der sich bildenden Copolymere, wodurch die Vernetzung zwischen den Polymermolekülen verringert wird, was die Viskosität und die Dispersionsstabilität sowie die Filtrierbarkeit der Graftpolyole beeinflusst. Der Anteil der Moderatoren beträgt üblicherweise 0,5 bis 25 Gew.-%, bezogen auf das Gesamtgewicht der zur Herstellung des Graftpolyols eingesetzten Monomere. Moderatoren, die üblicherweise zur Herstellung von Graftpolyolen eingesetzt werden, sind Alkohole, wie 1-Butanol, 2-Butanol, Isopropanol, Ethanol, Methanol, Cyclohexan, Toluene, Mercaptane, wie Ethanthiol, 1-Heptanthiol, 2-Octanethiol, 1-Dodecanthiol, Thiophenol, 2-Ethylhexylthioglycolate, Methylthioglycolate, Cyclohexylmercaptan sowie Enoletherverbindungen, Morpholine und α-(Benzoyloxy)styren.

Zur Initiierung der radikalischen Polymerisation werden üblicherweise Peroxid- oder Azo-Verbindungen, wie Dibenzoyl peroxide, Lauroyl peroxide, t-Amylperoxy-2-ethylhexanoate, Di-t-butyl peroxide, Diisopropyl peroxide carbonate, t-Butyl peroxy-2-ethylhexanoate, t-Butylperpivalate, t-Butylperneo-decanoate, t-Butylperbenzoate, t-Butyl percrotonate, t-Butyl perisobutyrate, t-Butylperoxy-1-methylpropanoate, t-Butylperoxy-2-ethylpentanoate, t-Butylperoxyoctanoate und di-t-butylperphthalate, 2,2'-Azobis(2,4-dimethyl-valereronitrile), 2,2'-Azobisisobutyronitrile (AIBN), Dimethyl-2,2'-azobisisobutyrate, 2,2'-Azobis(2-methylbutyronitrile (AMBN), 1,1'-Azobis(1-cyclohexanecarbonitrile) eingesetzt. Der Anteil der Initiatoren beträgt üblicherweise 0,1 bis 6 Gew.-%, bezogen auf das Gesamtgewicht der zur Herstellung des Graftpolyols eingesetzten Monomere.

Die radikalische Polymerisation zur Herstellung von Graftpolyolen wird aufgrund der Reaktionsgeschwindigkeit der Monomere sowie der Halbwertszeit der Initiatoren üblicherweise bei Temperaturen von 70 bis 150°C und einem Druck bis zu 20 bar durchgeführt. Bevorzugte Reaktionsbedingungen zur Herstellung von Graftpolyolen sind Temperaturen von 80 bis 140°C, bei einem Druck von Atmosphärendruck bis 15 bar.

Die Graft-Polyole b1) haben vorzugsweise einen Gehalt an polymerisierten Partikeln, auch als Feststoffgehalt bezeichnet, von mindestens 35 Gew.-%, bezogen auf das Gewicht des Graft-Polyols. Üblicherweise sollte ein Feststoffgehalt von 65 Gew.-% nicht überschritten werden, da ansonsten die Viskosität der Polyole zu stark ansteigt und es damit zu Problemen bei der Verarbeitung kommen kann.

Die Graftpolyole b1) haben vorzugsweise eine Teilchengröße der Polymere von 0,1µm bis 8µm, vorzugsweise 0,2 µm bis 4µm mit einem Maximum bei der Teilchengröße bei 0,2 bis 3 µm vorzugsweise bei 0,2 bis 2,0 µm.

In einer weiteren bevorzugten Ausführungsform der Graftpolyole b1) ist die Teilchengrößenverteilung bimodal, das heißt, die Verteilungskurve der Teilchengröße weist zwei Maxima auf. Derartige Graftpolyole können beispielsweise hergestellt werden, durch Mischen von Graftpolyolen mit monomodaler Teilchengrößenverteilung und unterschiedlicher Teilchengröße im entsprechenden Verhältnis aber auch indem man als Trägerpolyol in der Reaktionsvorlage ein Polyol verwendet, das bereits Polymerisate aus olefinisch ungesättigten Monomeren enthält. Die Teilchengröße liegt auch bei dieser Ausführungsform im oben beschriebenen Bereich.

Die Graftpolyole b1) können in kontinuierlichen Verfahren und diskontinuierlichen Verfahren hergestellt werden. Die Synthese von Graftpolyolen nach beiden Verfahren ist bekannt und wird in einer Reihe von Beispielen beschrieben. So wird die Synthese von Graftpolyolen nach den Semi Batch Verfahren in den folgenden Patenten beschrieben: EP 439 755 und US 4,522,976. Eine Sonderform des Semi Batch Verfahrens ist das Semi Batch Saatverfahren, bei dem in der Reaktionsvorlage zusätzlich ein Graftpolyol als Saat eingesetzt wird, beispielsweise beschrieben in EP 510 533 und in EP 698 628. Die Synthese von Graftpolyolen nach einen kontinuierlichen Verfahren ist ebenfalls bekannt und wird unter anderem in WO 00/59971 und WO 99/31160 beschrieben.

Das Graft-Polyol b1) kann prinzipiell als einzige Verbindung mit mindestens zwei mit Isocyanatgruppen reaktiven Wasserstoffatomen b) eingesetzt werden. Es ist jedoch bevorzugt, diese Verbindung b1) im Gemisch mit anderen Verbindungen mit mindestens zwei mit Isocyanatgruppen reaktiven Wasserstoffatomen einzusetzen.

Dazu können vorzugsweise die üblichen und bekannten Verbindungen mit mindestens zwei mit Isocyanatgruppen reaktiven Wasserstoffatomen zum Einsatz kommen. Vorzugsweise in Kombination mit den Graft-Polyolen b1) werden Polyetheralkohole und/oder Polyesteralkohole eingesetzt.

Die gemeinsam mit den Graftpolyolen b1) eingesetzten Polyesteralkohole werden zumeist durch Kondensation von mehrfunktionellen Alkoholen, vorzugsweise Diolen, mit 2 bis 12 Kohlenstoffatomen, vorzugsweise 2 bis 6 Kohlenstoffatomen, mit mehrfunktionellen Carbonsäuren mit 2 bis 12 Kohlenstoffatomen, beispielsweise Bernsteinsäure, Glutarsäure, Adipinsäure, Korksäure, Azelainsäure, Sebacinsäure, Decandicarbonsäure, Maleinsäure, Fumarsäure und vorzugsweise Phthalsäure, Isophthalsäure, Terephthalsäure und die isomeren Naphthalindicarbonsäuren, hergestellt.

Die gemeinsam mit den Graftpolyolen b1) verwendeten Polyetheralkohole haben zumeist eine Funktionalität zwischen 2 und 8, insbesondere 3 bis 8.

Insbesondere kommen Polyetheralkohole, die nach bekannten Verfahren, beispielsweise durch anionische Polymerisation von Alkylenoxiden in Gegenwart von Katalysatoren, vorzugsweise Alkalihydroxiden, hergestellt werden, zum Einsatz.

Als Alkylenoxide werden zumeist Ethylenoxid und/oder Propylenoxid, vorzugsweise reines 1,2-Propylenoxid eingesetzt.

Als Startmoleküle kommen insbesondere Verbindungen mit mindestens 3, vorzugsweise 4 bis 8 Hydroxylgruppen oder mit mindestens zwei primären Aminogruppen im Molekül zum Einsatz.

Als Startmoleküle mit mindestens 3, vorzugsweise 4 bis 8 Hydroxylgruppen im Molekül werden vorzugsweise Trimethylopropan, Glycerin, Pentaerythrit, Zuckerverbindungen wie beispielsweise Glucose, Sorbit, Mannit und Saccharose, mehrwertige Phenole, Resole, wie z. B. oligomere Kondensationsprodukte aus Phenol und Formaldehyd und Mannich-Kondensate aus Phenolen, Formaldehyd und Dialkanolaminen sowie Melamin eingesetzt.

Als Startmoleküle mit mindestens zwei primären Aminogruppen im Molekül werden vorzugsweise aromatische Di- und/oder Polyamine, beispielsweise Phenylendiamine, 2,3-, 2,4-, 3,4- und 2,6-Toluylendiamin (TDA) und 4,4'-, 2,4'- und 2,2'-Diaminodiphenylmethan sowie aliphatische Di- und Polyamine, wie Ethylendiamin, eingesetzt.

Die Polyetheralkohole besitzen eine Funktionalität von vorzugsweise 3 bis 8 und Hydroxylzahlen von vorzugsweise 100 mgKOH/g bis 1200 mgKOH/g und insbesondere 240 mgKOH/g bis 570 mgKOH/g.

In einer bevorzugten Ausführungsform des erfindungsgemäßen Verfahrens wird als Verbindungen mit mindestens zwei mit Isocyanatgruppen reaktiven Wasserstoffatomen eine Mischung aus dem Graft-Polyol b1), einem mit Saccharose gestarteten Polyetheralkohol b2) und einem mit einem dreifunktionellen Alkohol oder einem aromatischen Amin gestarteten Polyetheralkohol b3) eingesetzt.

Der Polyetheralkohol b2) hat vorzugsweise eine Hydroxylzahl im Bereich zwischen 375 und 525 mgKOH/g und eine Funktionalität von 5 bis 7,5. Die Saccharose wird zumeist im Gemisch mit Wasser und/oder anderen, bei Raumtemperatur flüssigen zwei- bis dreifunktionellen Alkoholen, wie Ethylenglykol, Propylenglykol und/oder Glyzerin mit den Alkylenoxiden, bevorzugt Propylenoxid und/oder Ethylenoxid, umgesetzt. Die Umsetzung kann mit Alkali- oder Erdalkalihydroxiden oder Aminen katalysiert werden.

Der Polyetheralkohol b3) hat vorzugsweise einen Hydroxylzahl im Bereich zwischen 100 und 250 mgKOH/g und eine Funktionalität von 3 bis 4. Als dreifunktionelle Alkohole werden vorzugsweise Glyzerin oder Trimethylolpropan eingesetzt. Als aromatisches Amin wird vorzugsweise TDA eingesetzt, wobei besonders bevorzugt die 2,3- und 3,4-Isomeren eingesetzt werden.

In dieser Ausführungsform der Erfindung besteht die Komponente b) aus 10 bis 25 Gew.-% der Komponente b1), 25 bis 65 Gew.-% aus einem mit Saccharose gestarteten Polyetheralkohol b2), und 10-40 Gew.-% aus einem mit einem aromatischen Amin oder einem mit einem dreiwertigen Alkohol gestartetem Polyetheralkohol b3).

Zu den übrigen für das erfindungsgemäße Verfahren eingesetzten Einsatzstoffen ist im einzelnen folgendes zu sagen:
Als organische Polyisocyanate a) kommen vorzugsweise aromatische mehrwertige Isocyanate in Betracht.

Im einzelnen seien beispielhaft genannt: 2,4- und 2,6-Toluylen-diisocyanat (TDI) und die entsprechenden Isomerengemische, 4,4'-, 2,4'- und 2,2'-Diphenylmethan-diisocyanat (MDI) und die entsprechenden Isomerengemische, Mischungen aus 4,4'- und 2,4'-Diphenylmethan-diisocyanaten, Polyphenyl-polymethylen-polyisocyanate, Mischungen aus 4,4'-, 2,4'- und 2,2'-Diphenylmethan-diisocyanaten und Polyphenyl-polymethylen-polyisocyanaten (Roh-MDI) und Mischungen aus Roh-MDI und Toluylendiisocyanaten. Die organischen Di- und Polyisocyanate können einzeln oder in Form von Mischungen eingesetzt werden.

Häufig werden auch sogenannte modifizierte mehrwertige Isocyanate, d. h. Produkte, die durch chemische Umsetzung organischer Di- und/oder Polyisocyanate erhalten werden, verwendet. Beispielhaft genannt seien Isocyanurat- und/oder Urethangruppen enthaltende Di- und/oder Polyisocyanate. Die modifizierten Polyisocyanate können gegebenenfalls miteinander oder mit unmodifizierten organischen Polyisocyanaten wie z. B. 2,4'-, 4,4'-Diphenylmethan-diisocyanat, Roh-MDI, 2,4- und/oder 2,6-Toluylen-diisocyanat gemischt werden.

Daneben können auch Umsetzungsprodukte von mehrwertigen Isocyanaten mit mehrwertigen Polyolen, sowie deren Mischungen mit anderen Di- und Polyisocyanaten Verwendung finden.

Besonders bewährt hat sich als organisches Polyisocyanat Roh-MDI mit einem NCO-Gehalt von 29 bis 33 Gew.-% und einer Viskosität bei 25°C im Bereich von 150 bis 1000 mPa s.

Weitere, an Stelle von oder in Kombination mit den Polyolen b2) und b3) einsetzbare Polyole wurden bereits oben beschrieben.

Zu den Verbindungen mit mindestens zwei gegenüber Isocyanat reaktiven Wasserstoffatomen b) gehören auch die gegebenenfalls mitverwendeten Kettenverlängerer und Vernetzer. Die PUR-Hartschaumstoffe können ohne oder unter Mitverwendung von Kettenverlängerungs- und/oder Vernetzungsmitteln hergestellt werden. Zur Modifizierung der mechanischen Eigenschaften kann sich der Zusatz von difunktionellen Kettenverlängerungsmitteln, tri- und höherfunktionellen Vernetzungsmitteln oder gegebenenfalls auch Gemischen davon als vorteilhaft erweisen. Als Kettenverlängerungs-und/oder Vernetzungsmittel verwendet werden vorzugsweise Alkanolamine und insbesondere Diole und/oder Triole mit Molekulargewichten kleiner als 400, vorzugsweise 60 bis 300.

Kettenverlängerungsmittel, Vernetzungsmittel oder Mischungen davon werden zweckmäßigerweise in einer Menge von 1 bis 20 Gew.-%, vorzugsweise 2 bis 5 Gew.-%, bezogen auf die Verbindungen mit mindestens zwei mit Isocyanatgruppen reaktiven Wasserstoffatomen b), eingesetzt.

Die Umsetzung wird üblicherweise in Anwesenheit von Katalysatoren, Treibmitteln sowie üblichen Hilfs- und/oder Zusatzstoffen durchgeführt.

Als Katalysatoren werden insbesondere Verbindungen eingesetzt, welche die Reaktion der Isocyanatgruppen mit den mit Isocyanatgruppen reaktiven Gruppen stark beschleunigen.

Solche Katalysatoren sind stark basische Amine, wie z. B. sekundäre aliphatische Amine, Imidazole, Amidine, sowie Alkanolamine oder organische Metallverbindungen, insbesondere organische Zinnverbindungen.

Wenn in den Polyurethan-Hartschaum auch Isocyanuratgruppen eingebaut werden sollen, werden dafür spezielle Katalysatoren benötigt. Als Isocyanurat-Katalysatoren werden üblicherweise Metallcarboxylate, insbesondere Kaliumacetat und dessen Lösungen, eingesetzt.

Die Katalysatoren können, je nach Erfordernis, allein oder in beliebigen Mischungen untereinander eingesetzt werden.

Als Treibmittel kann vorzugsweise Wasser verwendet werden, das mit Isocyanatgruppen unter Abspaltung von Kohlendioxid reagiert. In Kombination mit oder an Stelle von Wasser können auch sogenannte physikalische Treibmittel eingesetzt werden. Dabei handelt es sich um gegenüber den Einsatzkomponenten inerte Verbindungen, die zumeist bei Raumtemperatur flüssig sind und bei den Bedingungen der Urethanreaktion verdampfen. Vorzugsweise liegt der Siedepunkt dieser Verbindungen unter 50°C. Zu den physikalischen Treibmitteln zählen auch Verbindungen, die bei Raumtemperatur gasförmig sind und unter Druck in die Einsatzkomponenten eingebracht bzw. in ihnen gelöst werden, beispielsweise Kohlendioxid, niedrigsiedende Alkane und Fluoralkane.

Die Verbindungen werden zumeist ausgewählt aus der Gruppe, enthaltend Alkane und/oder Cycloalkane mit mindestens 4 Kohlenstoffatomen, Dialkylether, Ester, Ketone, Acetale, Fluoralkane mit 1 bis 8 Kohlenstoffatomen, und Tetraalkylsilane mit 1 bis 3 Kohlenstoffatomen in der Alkylkette, insbesondere Tetramethylsilan.

Als Beispiele seien genannt Propan, n-Butan, iso- und Cyclobutan, n-, iso- und Cyclopentan, Cyclohexan, Dimethylether, Methylethylether, Methylbutylether, Ameisensäuremethylester, Aceton sowie Fluoralkane, die in der Troposphäre abgebaut werden können und deshalb für die Ozonschicht unschädlich sind, wie Trifluormethan, Difluormethan, 1,1,1,3,3-Pentatluorbutan, 1,1,1,3,3-Pentafluorpropan, 1,1,1,2-Tetrafluorethan, Difluorethan und 1,1,1,2,3,3,3-Heptafluorpropan sowie Perfluoralkane wie: C₃F₈, C₄F₁₀, C₅F₁₂, C₆F₁₄ und C₇F₁₇. Die genannten physikalischen Treibmittel können allein oder in beliebigen Kombinationen untereinander eingesetzt werden.

Besonders bevorzugt enthält das Treibmittel mindestens einen aliphatischen Kohlenwasserstoff, der vorzugsweise mindestens 4 Kohlenstoffatome enthält. Dieser wird in einer bevorzugten Ausführungsform des erfindungsgemäßen Verfahrens eine Kombination aus Wasser und einem aliphatischen Kohlenwasserstoff als Treibmittel eingesetzt. Bevorzugte Kohlenwasserstoffe sind n-Pentan, Isopentan und Cyclopentan.

Das erfindungsgemäße Verfahren kann, falls erforderlich, in Anwesenheit von Flammschutzmitteln sowie üblichen Hilfs- und/oder Zusatzstoffen durchgeführt werden.

Als Flammenschutzmittel können organische Phosphorsäure- und/oder Phosphonsäureester zur Anwendung kommen. Vorzugsweise werden gegenüber Isocyanatgruppen nicht reaktive Verbindungen eingesetzt. Auch Chlor enthaltende Phosphorsäureester gehören zu den bevorzugten Verbindungen.

Typischer Vertreter dieser Gruppe von Flammschutzmitteln sind Triethylphosphat, Diphenylkresylphosphat, Tris-(Chlorpropyl)-phosphat sowie Diethylethanphosphonat.

Daneben können auch Brom enthaltende Flammschutzmittel zum Einsatz kommen. Als Brom enthaltende Flammschutzmittel werden vorzugsweise gegenüber der Isocyanatgruppe reaktive Gruppen aufweisende Verbindungen eingesetzt. Derartige Verbindungen sind Ester der Tetrabromphthalsäure mit aliphatischen Diolen und Alkoxylierungsprodukte des Dibrombutendiols. Auch Verbindungen, die sich aus der Reihe der bromierten, OH-Gruppen enthaltenden Neopentylverbindungen ableiten, können zur Anwendung kommen.

Als Hilfsmittel und/oder Zusatzstoffe kommen die für diesen Zweck an sich bekannten Stoffe, beispielsweise oberflächenaktive Substanzen, Schaumstabilisatoren, Zellregler, Füllstoffe, Pigmente, Farbstoffe, Flammschutzmittel, Hydrolyseschutzmittel, Antistatika, fungistatisch und bakteriostatisch wirkende Mittel zum Einsatz.

Nähere Angaben über die zur Durchführung des erfindungsgemäßen Verfahrens eingesetzten Ausgangsstoffe, Treibmittel, Katalysatoren sowie Hilfs- und/oder Zusatzstoffe finden sich beispielsweise im Kunststoffhandbuch, Band 7, "Polyurethane" Carl-Hanser-Verlag München, 1. Auflage, 1966, 2. Auflage; 1983 und 3. Auflage, 1993.

Zur Herstellung der Polyurethan-Hartschaumstoffe werden die Polyisocyanate a), und die Verbindungen mit mindestens zwei mit Isocyanatgruppen reaktiven Wasserstoffatomen b) in solchen Mengen zur Umsetzung gebracht, daß der Isocyanatindex in einem Bereich zwischen 100 und 220, vorzugsweise zwischen 115 und 195, liegt. Die Polyurethan-Hartschaumstoffe können diskontinuierlich oder kontinuierlich mit Hilfe bekannter Mischvorrichtungen hergestellt werden.

Bei der Herstellung von Polyisocyanuratschäumen kann auch mit einem höheren Index, vorzugsweise bis 350, gearbeitet werden.

Üblicherweise werden die erfindungsgemäßen PUR-Hartschaumstoffe nach dem Zweikomponenten-Verfahren hergestellt. Bei diesem Verfahren werden die Verbindungen mit mindestens zwei gegenüber Isocyanatgruppen reaktiven Wasserstoffatomen b), mit den Flammschutzmitteln, den Katalysatoren c), den Treibmitteln d), sowie den weiteren Hilfs- und/oder Zusatzstoffen zu einer sogenannten Polyolkomponente vermischt und diese mit den Polyisocyanaten oder Mischungen aus den Polyisocyanaten und gegebenenfalls Treibmitteln, auch als Isocyanatkomponente bezeichnet, zur Umsetzung gebracht.

Die Ausgangskomponenten werden zumeist bei einer Temperatur von 15 bis 35°C, vorzugsweise von 20 bis 30 °C gemischt. Das Reaktionsgemisch kann mit Hoch- oder Niederdruckdosiermaschinen in geschlossene Stützwerkzeuge gegossen werden. Nach dieser Technologie werden z. B. diskontinuierlich Sandwichelemente gefertigt.

Daneben kann das Reaktionsgemisch auch frei auf Flächen oder in offene Hohlräume gegossen oder gespritzt werden. Nach diesem Verfahren lassen sich Dächer bzw. komplizierte Behälter vor Ort isolieren.

Auch die kontinuierliche Vermischung der Isocyanatkomponente mit der Polyolkomponente zur Herstellung von Sandwich- oder Dämmelementen auf Doppelbandanlagen ist eine bevorzugte Ausführungsform des erfindungsgemäßen Verfahrens. Bei dieser Technologie ist es üblich, die Katalysatoren und die Treibmittel über weitere Dosierpumpen in die Polkomponente zu dosieren. Dabei können die eingesetzten Komponenten in bis zu 8 Einzelkomponenten aufgeteilt werden. Die Verschäumrezepturen lassen sich, abgeleitet von dem Zwei-Komponentenverfahren in einfacher Weise auf die Verarbeitung von Mehrkomponentensystemen umrechnen.

Die nach dem erfindungsgemäßen Verfahren hergestellten Polyurethan-Hartschaumstoffe sind mit einer sehr kurzen Entformzeit auf Basis einer phasenstabilen Polyol-komponente herstellbar, was signifikant verkürzte Taktzeiten ermöglicht. In der Polyol-komponente sind trotz Anwesenheit der Graftpolyols große Mengen an physikalischen Treibmittel löslich, so dass Schaumstoffdichten im Bauteil von unter 30 g/l erreicht werden können. Die Schaumstoffeigenschaften in Bezug auf Druckfestigkeit, Wärmeleitfähigkeit und Qualität der Schaumstoffoberflächen/Bildung von Lunkern sind exzellent.

Die Erfindung soll an den nachfolgenden Beispielen näher erläutert werden.

### Meßmethoden

1) Die Viskosität der Polyole bei 25 °C wurde mit einem Rotationsviskosimeter Rheotec RC 20 unter Verwendung der Spindel CC 25 DIN (Spindel-Durchmesser: 12.5 mm; Messzylinder-Innendurchmesser: 13.56 mm) bei einer Scherrate von 50 1/s bestimmt.
2) Der Feststoffgehalt der Graftpolyole und der Graftpolyolmischungen wurde gravimetrisch ermittelt. Dazu wurden ca. 2 g Graftpolyol mit ca. 80 g Isopropanol oder Methanol in einem Zentrifugenröhrchen fein dispergiert. Anschließend wurde der Feststoff in einer Hochgeschwindigkeitszentrifuge Sorvall RC 26 Plus bei 20000 U/min (44670 g) abgetrennt. Nach Dekantieren der sich über dem Feststoff befindlichen flüssigen Phase wurde der Feststoff noch weitere zweimal in Isopropanol bzw. Methanol redispergiert, gefolgt von Zentrifugieren und dem Abtrennen der flüssigen Phase. Nach Trocknen des Feststoffes bei 80°C und einem Druck von < 1 mbar für mindestens zwei Stunden in einem Vakuumtrockenschrank wurde der prozentuale Feststoffgehalt aus der Masse des abgetrennten Feststoffes und der Masse des eingesetzten Graftpolyols berechnet.
3) Die Dielektrizitätskonstante ε' der Polyole und Makromer wurde nach DIN 53483 ermittelt. Die bei 23 °C und 1000 Hz gemessenen Werte sind angegeben.
4) Die Wärmeleitfähigkeit wurde bestimmt nach DIN 52616-77. Zur Herstellung der Prüfkörper wurde das Polyurethan-Reaktionsgemisch in eine Form der Maße 200 x 20 x 5 cm gegossen (10 % Überfüllung) und nach einigen Stunden ein Prüfkörper der Dimension 20 x 20 x 2,5 cm aus der Mitte geschnitten.
5) Die Druckfestigkeit wurde bestimmt nach DIN 53421/DIN EN ISO 604
6) Die Härtung wurde mit dem Bolzentest ermittelt. Dazu wird 2, 3 und 4 Minuten nach Vermischung der Komponenten in einem Polystyrol-Becher ein Stahlbolzen mit einer Kugelkalotte von 10 mm Radius mit einer Zug/Druckprüfmaschine 10 mm tief in den entstandenen Schaumpilz eingedrückt. Die dafür erforderliche Maximalkraft in N ist ein Maß für die Härtung des Schaumstoffs. Angegeben ist jeweils die Summe der gemessenen Maximalkräfte nach 2, 3 und 4 Minuten.
7) Der Anteil an geschlossenen Zellen wurde bestimmt nach ISO 4590.
8) Visuelle Beurteilung der Feinzelligkeit/Schaumstruktur: 1: sehr feinzellig; 2: feinzellig; 3: leicht grobzellig; 4: grobzellig.
9) Visuelle Beurteilung der Tendenz zur Bildung von Bodenstörungen bzw. Lunkern der Sandwichelemente. 1: sehr glatte Oberfläche, keinerlei Bodenstörungen/Lunker an der Unterseite des Sandwichelements; 2: sehr vereinzelt schwache Bodenstörungen/Lunker an der Unterseite des Sandwichelements; 3: einige Bodenstörungen/Lunker an der Unterseite des Sandwichelements; 4: ganzflächig massive Bodenstörungen an der Unterseite des Sandwichelements
10) Das Brandverhalten wurde bestimmt im Kleinbrennertest nach DIN 4102
11) Beurteilung der Härtung der Sandwichelemente am Bandende:
   1: minimale Änderung der Elementdicke nach 24 h
   2: leichte Änderung der Elementdicke nach 24 h
   3: deutliche Änderung der Elementdicke nach 24 h

### Herstellung der Makromere

Zum Basispolyol mit einem Wassergehalt < 0,02 Gew.% wurden bei einer Temperatur von 80 °C unter Rühren Dibutylzinndilaurat als Veresterungskatalysator und 3-Isopropenyl-α,α-dimethylbenzyl-isocyanat (TMI) (0,8 mol pro mol Basispolyol) gegeben. Das Gemisch wurde für eine weitere Stunde bei 80 °C gerührt. Anschließend wurde Phosphorsäure zur Deaktivierung des Katalysators zugegeben und das Produkt auf 25°C abgekühlt und mit Antioxidantien stabilisiert.

### Herstellung der Graftpolyole

Die in den folgenden Beispielen eingesetzten Graftpolyole wurden in kontinuierlichen Verfahren und diskontinuierlichen Verfahren hergestellt. Die Synthese von Graftpolyolen nach beiden Verfahren ist bekannt und wird in einer Reihe von Beispielen beschrieben. So wird die Synthese von Graftpolyolen nach den Semi Batch Verfahrenbeispielsweise in Patenten wie EP 439 755 beschrieben. Eine Sonderform des Semi Batch Verfahrens ist das Semi Batch Saatverfahren, bei dem in der Reaktionsvorlage zusätzlich ein Graftpolyol als Saat eingesetzt wird, beispielsweise beschrieben in EP 510 533. Die Synthese von Graftpolyolen mit einer bimodalen Teilchengrößenverteilung wird in WO 03/078496 beschrieben. Die Synthese von Graftpolyolen nach einen kontinuierlichen Verfahren ist ebenfalls bekannt und wird beispielsweise in WO 00/59971 beschrieben.

### Graftpolyole, hergestellt im Semi Batch Verfahren

Die Herstellung der Graftpolyole nach dem Semi Batch Verfahren erfolgte in einem 2 Liter Autoklav ausgestattet mit 2-stufigen Rührwerk, innenliegenden Kühlschlangen und elektrischen Heizmantel. Vor Beginn der Reaktion wurde der Reaktor mit einem Gemisch aus Carrierpolyol und Makromer befüllt, mit Stickstoff gespült und auf Synthesetemperatur von 125 bzw. 130°C erwärmt. Bei einigen Synthesen wurde der Reaktionsvorlage neben dem Carrierpolyol und dem Makromer zusätzlich ein Graftpolyol als Saat zugesetzt. Bei einer weiteren Gruppe von Versuchen wurde nur ein Teil des Makromers im Reaktor vorgelegt. Die verbleibende Menge wurde während der Synthese über einen unabhängigen Dosierstrom in den Reaktor überführt.

Der restliche Teil der Reaktionsmischung bestehend aus weiteren Carrierpolyol, Initiator, den Monomeren und den Reaktionsmoderator wurde in mindestens zwei Dosierbehältern vorgelegt. Die Synthese der Graftpolyole erfolgte durch Überführen der Rohstoffe aus den Dosierbehältern mit konstanter Dosiergeschwindigkeit über einen statischen In-Line Mischer in den Reaktor. Die Dosierdauer für das Monomer-Moderator-Gemisch betrug 150 oder 180 Minuten, während das Polyol-Initiator-Gemisch über 165 oder 195 Minuten in den Reaktor dosiert wurde. Nach weiteren 10 bis 30 Minuten Nachreaktionszeit bei Reaktionstemperatur wurde das Rohgraftpolyol über das Bodenablaufventil in einen Glaskolben überführt. Anschließend wurde das Produkt bei einer Temperatur von 135°C unter Vakuum (< 0,1 mbar) von den nicht umgesetzten Monomeren und anderen flüchtigen Verbindungen befreit. Das Endprodukt wurde abschließend mit Antioxidantien stabilisiert.

### Beispiele 1-8, Vergleichsbeispiele 1-3

### Herstellung von Hartschaumstoffen zum Einsatz in Kühlgeräten (Maschinenverschäumung)

Die verschiedenen Polyole, Stabilisatoren, Katalysatoren werden mit Wasser und dem Treibmittel in den in Tabelle 1 angegebenen Verhältnissen gemischt. 100 Gewichtsteile der Polyolkomponente wurden mit der jeweiligen in Tabelle 1 genannten Menge einer Mischung aus Diphenylmethandiisocyanat und Polyphenylen-polymethylen-polyisocyanat mit einem NCO-Gehalt von 31,5 Gew.-% und einer Viskosität von 200 mPas (25 °C) in einer Hochdruck-Verschäummaschine vom Typ Puromat® HD 30 (Elastogran GmbH) vermischt. Die Reaktionsmischung wurde in ein Formwerkzeug der Abmessungen 200 cm x 20 cm x 5 cm bzw. 40 cm x 70 cm x 9 cm eingespritzt und dort aufschäumen lassen. Die Eigenschaften und Kennzahlen der erhaltenen Schaumstoffe sind in Tabelle 1 angeben.

**Tabelle 1**

| | Vergleichsbsp.1 | Vergleichsbsp.2 | Vergleichsbsp.3 | Bsp. 1 | Bsp. 2 | Bsp. 3 | Bsp. 4 | Bsp. 5 | Bsp. 6 | Bsp. 7 | Bsp. 8 |
|---|---|---|---|---|---|---|---|---|---|---|---|
| Polyol 1 | 20 | 20 | 20 | 20 | 20 | 20 | 20 | 20 | 20 | 20 | |
| Polyol 2 | 56.6 | 56.6 | 56.6 | 56.6 | 56.6 | 56.6 | 56.6 | 56.6 | 56.6 | 56.6 | 56.6 |
| Polyol 3 | 18 | | | | | | | | | | |
| Polyol 4 | | 18 | | | | | | | | | |
| Polyol 5 | | | | | | | | | | | 20 |
| Polyol 6 | | | | 18 | | | | | | | |
| Polyol 7 | | | | | 18 | | | | | | |
| Polyol 8 | | | | | | 18 | 18 | 18 | 18 | | |
| Polyol 9 | | | | | | | | | | 18 | |
| Polyol 10 | | | | | | | | | | | 18 |
| Polyol 11 | | | 18 | | | | | | | | |
| Stabilisator 1 | 2 | 2 | 2 | 2 | 2 | 2 | 2 | 2 | 2 | 2 | 2 |
| Wasser | 2.3 | 2.3 | 2.3 | 2.3 | 2.3 | 2.3 | 2.3 | 2.3 | 2.3 | 2.3 | 2.3 |
| Katalysator 1 | 1.8 | 1.8 | 1.8 | 2.1 | 2.1 | 2.1 | 2.0 | 3.7 | 4.1 | 2.1 | 2.3 |
| Cyclopentan | 9.8 | 9.8 | 9.8 | 9.8 | 9.8 | 9.8 | 14 | | | 9.8 | 9.8 |
| Isopentan | 4.2 | 4.2 | 4.2 | 4.2 | 4.2 | 4.2 | | | | 4.2 | 4.2 |
| 141b | | | | | | | | 35 | | | |
| 245fa | | | | | | | | | 35 | | |
| EO-Gehalt in Polyolkomp. [%] | 3,0 | 4,0 | 4,0 | 3 | 3 | 3,5 | 3,5 | 3,5 | 3,5 | 3,5 | 0 |
| Mischungsverhältnis 100: | 125 | 125 | 125 | 120 | 121 | 121 | 121 | 101 | 101 | 121 | 121 |
| Kennzahl | 117 | 117 | 117 | 117 | 117 | 117 | 117 | 117 | 117 | 117 | 117 |
| Abbindezeit [s] | 43 | 40 | 41 | 38 | 40 | 38 | 42 | 40 | 37 | 40 | 40 |
| Freigeschäumte Rohdichte [g/l] | 23.8 | 24.5 | 24.3 | 23.9 | 24.3 | 24.5 | 23.9 | 21.4 | 22.1 | 24.4 | 24.2 |
| Minimale Fülldichte [g/l] | 31.9 | 32.1 | 32.2 | 31.9 | 31.6 | 31.8 | 31.5 | 30.4 | 28.7 | 32.0 | 31.9 |
| Fließfaktor (min. Fülldichte / freie Rohdichte) | 1.31 | 1.31 | 1.33 | 1.33 | 1.30 | 1.30 | 1.32 | 1.42 | 1.3 | 1.31 | 1.32 |
| Offenzelligkeit [%] | 6 | 5 | 5 | 5 | 5 | 4 | 7 | 7 | 6 | 6 | 6 |
| Wärmeleitfähigkeit [mW/mK] | 19.7 | 19.6 | 19.9 | 19.7 | 19.8 | 19.5 | 19.2 | 17.0 | 17.5 | 19.8 | 19.6 |
| Druckfestigkeit (RD 31) 20% OP, [N/mm²] | 0.16 | 0.16 | 0.15 | 0.14 | 0.15 | 0.15 | 0.15 | 0.13 | 0.13 | 0.15 | 0.15 |
| Nachtrieb nach 24h, 4 Min. 20% Overpack [mm] | 93.2 | 92.8 | 92.5 | 91.4 | 91.0 | 91.1 | 91.3 | 91.5 | 91.6 | 91.3 | 91.0 |

Alle Polyolkomponenten (Vergleichsbsp. 1 und 2, Beispiele 1 - 8) sind für mind. 14 Tage bei Raumtemperatur phasenstabil. Lediglich bei Vergleichsbsp. 3 separiert sich die Polyolkomponente nach wenigen Sekunden.

Der einzige Unterschied zwischen Vergleichsbeispiel 3 und Beispiel 8 ist die Zusammensetzung der Graftpartikel, die in einem Fall zur sofortigen Phasenseparation, im anderen Fall zu einer lagerstabilen Komponente führt. Der Überschuss an Acrylnitril im Verhältnis zu Styrol ist für die Phasenstabilität der Polyolkomponente offenbar entscheidend.

### Beispiele 9-14 und Vergleichsbeispiel 4-5.

### Herstellung von Polyurethan-Sandwichelementen mit dem Doppelbandverfahren

Aus den in Tabelle 2 aufgeführten Einsatzstoffen wurde eine Polyolkomponente hergestellt und im angegebenen Mischungsverhältnis auf einer Doppelbandanlage mit einer Mischung aus Diphenylmethandiisocyanat und Polyphenylen-polymethylen-polyisocyanat mit einem NCO-Gehalt von 31.0 Gew.-% und einer Viskosität von 520 mPas (25°C) zur Herstellung eines Sandwichelements mit einer Stärke von 120 mm zur Reaktion gebracht. Die eingesetzten Rohstoffe sowie die Eigenschaften der Sandwichelemente sind in Tabelle 2 aufgeführt. Alle hier genannten Schaumstoffe erfüllen die Brandschutzklasse B2 nach DIN4102.

**Tabelle 2**

| | Vergleichsbsp.4 | Vergleichsbsp.5 | Bsp. 9 | Bsp. 10 | Bsp. 11 | Bsp. 12 | Bsp. 13 | Bsp. 14 |
|---|---|---|---|---|---|---|---|---|
| Polyol 12 | 51.1 | 51.1 | 51.1 | 51.1 | 51.1 | 51.1 | 51.1 | 51.1 |
| Polyol 13 | 5 | 5 | 5 | 5 | 5 | 5 | 5 | 5 |
| Glycerin | 4.5 | 4.5 | 4.5 | 4.5 | 4.5 | 4.5 | 4.5 | 4.5 |
| Dipropylenglykol | 0.2 | 0.2 | 0.2 | 0.2 | 0.2 | 0.2 | 0.2 | 0.2 |
| Polyol 6 | | | 5 | | | | | |
| Polyol 7 | | | | 5 | | | | |
| Polyol 8 | | | | | 5 | | | |
| Polyol 9 | | | | | | 5 | | |
| Polyol 10 | | | | | | | 5 | 4,5 |
| Polyol 11 | | 5 | | | | | | |
| Flammschutzmittel 1 | 37.5 | 37.5 | 37.5 | 37.5 | 37.5 | 37.5 | 37.5 | 37.5 |
| Stabilisator 2 | 1.8 | 1.8 | 1.8 | 1.8 | 1.8 | 1.8 | 1.8 | 2.3 |
| Wasser | 2.5 | 2.5 | 2.5 | 2.5 | 2.5 | 2.5 | 2.5 | 2.5 |
| Katalysator 2 | 3.1 | 3.1 | 3.1 | 3.1 | 3.1 | 3.1 | 3.1 | 3.1 |
| n-Pentan | 6 | 6 | 6 | 6 | 6 | 6 | 6 | 6 |
| | | | | | | | | |
| Kennzahl | 126 | 126 | 126 | 126 | 126 | 126 | 126 | 126 |
| Startzeit [s] | 17 | 17 | 18 | 17 | 16 | 16 | 17 | 17 |
| Abbindezeit [s] | 45 | 46 | 47 | 45 | 43 | 42 | 44 | 45 |
| Rohdichte [g/l] | 40 | 40 | 41 | 40 | 39 | 41 | 39 | 40 |
| Elementdicke [mm] | 120 | 120 | 120 | 120 | 120 | 120 | 120 | 120 |
| Bolzentest [N] | 120 | 145 | 170 | 175 | 180 | 185 | 170 | 180 |
| Offenzelligkeit [%] | 8 | 8 | 7 | 6 | 9 | 7 | 6 | 8 |
| Aushärtung am Bandende | 3 | 2-3 | 2 | 2 | 1-2 | 1-2 | 2 | 2 |
| Lunkerhäufigkeit | 3 | 2 | 1-2 | 1-2 | 1-2 | 1-2 | 1-2 | 1-2 |
| Schaumstruktur | 2 | 2 | 2 | 2 | 2 | 2 | 2 | 2 |

Vergleichsbeispiel 5 kann nur verarbeitet werden, indem das Polyol 11 über eine separate Pumpe direkt am Mischkopf dem Reaktionsgemisch zugeführt wird, in alle anderen Beispielen und im Vergleichsbeispiel 4 sind alle Polyole zu einer lagerstabilen Polyolkomponente mit den anderen Polyolen und Flammschutzmittel vermischt.
Polyol 1: Polyetheralkohol auf Basis TDAvic, Ethylenoxid und Propylenoxid, Hydroxylzahl: 400 mg KOH/g.
Polyol 2: Polyetheralkohol auf Basis Saccharose, Glycerin und Propylenoxid, Hydroxylzahl: 450 mg KOH/g.
Polyol 3: Polyetheralkohol auf Basis Trimethylolpropan und Propylenoxid, Hydroxylzahl: 160 mg KOH/g.
Polyol 4: Polyetheralkohol auf Basis TDAvic, Ethylenoxid und Propylenoxid, Hydroxylzahl: 160 mg KOH/g.
Polyol 5: Polyetheralkohol auf Basis TDAvic und Propylenoxid, Hydroxylzahl: 400 mg KOH/g.
Polyol 6: Graftpolyol mit einer Hydroxylzahl von 72 mg KOH/g, einem Feststoffanteil von 50 Gew.-%, hergestellt durch in-situ Polymerisation von Acrylnitril und Styrol in einem Masseverhältnis von 1,1:1 in einem Trägerpolyol auf Basis von Polypropylenglykol, Makromer 2, Hydroxylzahl 145 mg KOH/g, Dielektrizitätskonstante ε' (23 °C, 1000 Hz) = 5.0
Polyol 7: Graftpolyol mit einer Hydroxylzahl von 80 mg KOH/g, einem Feststoffanteil von 45 Gew.-%, hergestellt durch in-situ Polymerisation von Acrylnitril und Styrol in einem Masseverhältnis von 3:1 in einem Trägerpolyol auf Basis von Trimethylolpropan und Propylenoxid, Makromer 1, Hydroxylzahl 160 mg KOH/g, Dielektrizitätskonstante ε' (23 °C, 1000 Hz) = 5.1
Polyol 8: Graftpolyol mit einer Hydroxylzahl von 80 mg KOH/g, einem Feststoffanteil von 45 Gew.-%, hergestellt durch in-situ Polymerisation von Acrylnitril und Styrol in einem Massenverhältnis von 2:1 in einem Trägerpolyol auf Basis von TDAvic und Propylenoxid, Makromer 1, Hydroxylzahl 160 mg KOH/g, Dielektrizitätskonstante ε' (23°C, 1000 Hz) = 5.1
Polyol 9: Graftpolyol mit einer Hydroxylzahl von 80 mg KOH/g, einem Feststoffanteil von 45 Gew.-%, hergestellt durch in-situ Polymerisation von Acrylnitril und Styrol in einem Masseverhältnis von 3:1 in einem Trägerpolyol auf Basis von TDAvic und Propylenoxid, Makromer 1, Hydroxylzahl 160 mg KOH/g, Dielektrizitätskonstante ε' (23°C, 1000 Hz) = 5.3
Polyol 10: Graftpolyol mit einer Hydroxylzahl von 80 mg KOH/g, einem Feststoffanteil von 45 Gew.-%, hergestellt durch in-situ Polymerisation von Acrylnitril und Styrol in einem Masseverhältnis von 3:1 in einem Trägerpolyol auf Basis von Trimethylolpropan und Propylenoxid, Makromer 1, Hydroxylzahl 160 mg KOH/g, Dielektrizitätskonstante ε' (23 °C, 1000 Hz) = 5.0
Polyol 11: Graftpolyol mit einer Hydroxylzahl von 80 mg KOH/g, einem Feststoffanteil von 45 Gew.-%, hergestellt durch in-situ Polymerisation von Acrylnitril und Styrol in einem Masseverhältnis von 1:2 in einem Trägerpolyol auf Basis von Trimethylolpropan und Propylenoxid, Makromer 1, Hydroxylzahl 160 mg KOH/g.
Polyol 12: Polyetheralkohol auf Basis Saccharose, Glycerin und Propylenoxid, Hydroxylzahl: 490 mg KOH/g.
Polyol 13: Polyetheralkohol auf Basis Ethylendiamin und Propylenoxid, Hydroxylzahl: 770 mg KOH/g.

Makromer 1: 3-Isopropenyl-alpha,alpha-dimethylbenzyl-isocyanat (TMI)-Addukt eines Polyetheralkohols auf Basis Sorbitol, Propylenoxid, ca. 25 % Ethylenoxid; Hydroxylzahl Basispolyol: 18 mg KOH/g, Dielektrizitätskonstante ε' (23°C, 1000 Hz) = 5.6 Makromer 2: 3-Isopropenyl-alpha,alpha-dimethylbenzyl-isocyanat (TMI)-Addukt eines Polyetheralkohols auf Basis Saccharose, Propylenoxid; Hydroxylzahl Basispolyol: 25 mg KOH/g, Dielektrizitätskonstante ε' (23 °C, 1000 Hz) = 5.6

### Stabilisator 1: Tegostab® B8462, Degussa AG

### Stabilisator 2: 72 % Tegostab B8466 (Fa. Degusta), 28 % Dabco DC5103 (Fa. Air Products)

Katalysator 1: Gemisch aus 50 % N-N-Dimethylcyclohexylamin, 20 % Lupragen® N301, BASF AG und 30 % Lupragen® N600, BASF AG.
Katalysator 2: KX315, Elastogran GmbH
Flammschutzmittel 1: Gemisch aus 53 % Trischlorpropylphosphat, 13 % Diethylethanphosphonat und 34 % Ixol B251 (Fa. Solvay)

## Patentansprüche

1. Verfahren zur Herstellung von Polyurethan-Hartschaumstoffen durch Umsetzung von
a) Polyisocyanaten mit
b) Verbindungen mit mindestens zwei mit Isocyanatgruppen reaktiven Wasserstoffatomen in Gegenwart von
c) Treibmitteln,
**dadurch gekennzeichnet, dass** als Verbindungen mit mindestens zwei mit Isocyanatgruppen reaktiven Wasserstoffatomen b) mindestens ein Graft-Polyol b1) eingesetzt wird, der herstellbar ist durch in-situ Polymerisation von olefinisch ungesättigten Monomeren in einem Polyetheralkohol b1i), wobei der Polyetheralkohol b1i) eine Funktionalität von 2 bis 4 und eine Hydroxylzahl im Bereich zwischen 100 und 250 mg KOH/g aufweist, seine Polyetherkette aus Propylenoxid und bis zu 20 Gew.-%, bezogen auf den Polyetheralkohol b1i), Ethylenoxid aufgebaut ist, und als olefinisch ungesättigte Monomere Acrylnitril und Styrol in einem Gewichtsverhältnis von Acrylnitril : Styrol von > 1 : 1 bis 4 : 1 eingesetzt werden, und die Umsetzung in Anwesenheit mindestens einer im Polyetheralkohol b1i) mischbaren Verbindung mit mindestens einer olefinischen Doppelbindung b1ii) durchgeführt wird.

2. Verfahren nach Anspruch 1, **dadurch gekennzeichnet, dass** die Polyetheralkohole b1i) durch Anlagerung von Alkylenoxiden an zwei- bis vierfunktionelle Alkohole hergestellt werden.

3. Verfahren nach Anspruch 1, **dadurch gekennzeichnet, dass** die Polyetheralkohole b1i) durch Anlagerung von Alkylenoxiden an drei- bis vierfunktionelle Alkohole hergestellt werden.

4. Verfahren nach Anspruch 1, **dadurch gekennzeichnet, dass** die Polyetherkette der Polyetheralkohole b1i) aus bis zu 10 Gew.-%, bezogen auf den Polyetheralkohol b1i), Ethylenoxid aufgebaut ist.

5. Verfahren nach Anspruch 1, **dadurch gekennzeichnet, dass** die Polyetheralkohole b1i) durch Anlagerung von Alkylenoxiden an Toluylendiamin hergestellt werden.

6. Verfahren nach Anspruch 1, **dadurch gekennzeichnet, dass** die Polyetheralkohole b1i) durch Anlagerung von Alkylenoxiden an Ethylendiamin hergestellt werden.

7. Verfahren nach Anspruch 1, **dadurch gekennzeichnet, dass** die im Polyetheralkohol b1i) mischbare Verbindung mit mindestens einer olefinischen Doppelbindung b1ii) ein Molgewicht von 3000 bis 30000 g/mol aufweist.

8. Verfahren nach Anspruch 1, **dadurch gekennzeichnet, dass** das Graft-Polyol b1) einen Feststoffgehalt von mindestens 35 Gew.-%, bezogen auf das Gewicht des Graftpolyols b1), aufweist.

9. Verfahren nach Anspruch 1, **dadurch gekennzeichnet, dass** das Graft-Polyol b1) durch Polymerisation eines Gemisches aus Acrylnitril und Styrol mit einem Gewichtsverhältnis von Acrylnitril : Styrol von 2 : 1 bis 4 : 1 hergestellt wird.

10. Verfahren nach Anspruch 1, **dadurch gekennzeichnet, dass** das Graft-Polyol b1) durch Polymerisation eines Gemisches aus Acrylnitril und Styrol mit einem Gewichtsverhältnis von Acrylnitril : Styrol von > 3 : 1 bis 5 : 1 hergestellt wird.

11. Verfahren nach Anspruch 1, **dadurch gekennzeichnet, dass** das Graftpolyol b1) eine Hydroxylzahl von 40-150 mg KOH/g aufweist.

12. Verfahren nach Anspruch 1, **dadurch gekennzeichnet, dass** die Verteilung der Graftpolyolpartikel ein Maximum zwischen 0.1 µm bis 8 µm aufweist, bevorzugt 0.1 µm bis 2 µm.

13. Verfahren nach Anspruch 1, **dadurch gekennzeichnet, dass** die Graftpolyolpartikel eine deutlich separierte bimodale Teilchengröße aufweisen.

14. Verfahren nach Anspruch 1, **dadurch gekennzeichnet, dass** die Polyetheralkohole b1ii) durch Anlagerung von Alkylenoxiden an zwei- bis achtfunktionelle Alkohole hergestellt werden.

15. Verfahren nach Anspruch 1, **dadurch gekennzeichnet, dass** die Polyetheralkohole b1i) durch Anlagerung von Alkylenoxiden an vier- bis achtfunktionelle Alkohole hergestellt werden.

16. Verfahren nach Anspruch 1 **dadurch gekennzeichnet, dass** die im Polyetheralkohol b1i) mischbare Verbindung mit mindestens einer olefinischen Doppelbindung ein Umsetzungsprodukt aus einem Polyetheralkohol b1i) mit einer mindestens eine olefinischen Doppelbindung enthaltenden organischen Säure, einem mindestens eine olefinischen Doppelbindung enthaltenden organischen Säureanhydrid oder einem mindestens eine olefinischen Doppelbindung enthaltenden organischen Esters ist.

17. Verfahren nach Anspruch 1 **dadurch gekennzeichnet, dass** die im Polyetheralkohol b1i) mischbare Verbindung mit mindestens einer olefinischen Doppelbindung b1ii) ein Umsetzungsprodukt aus einem Polyetheralkohol mit einem mindestens eine olefinische Doppelbindung enthaltenden Isocyanat ist.

18. Verfahren nach Anspruch 1, **dadurch gekennzeichnet, dass** die Verbindungen mit mindestens zwei mit Isocyanatgruppen reaktiven Wasserstoffatomen b) 10 bis 25 Gew.-% der Komponente b1), bezogen auf das Gewicht der Komponente b), enthalten.

19. Verfahren nach Anspruch 1, **dadurch gekennzeichnet, dass** die Komponente b) aus 10 bis 25 Gew.-% der Komponente b1), 25 bis 65 Gew.-% aus einem mit Saccharose gestarteten Polyetheralkohol b2), und 10 bis 40 Gew.-% aus einem mit einem aromatischen Amin oder einem mit einem dreiwertigen Alkohol gestartetem Polyetheralkohol b3) besteht.

20. Verfahren nach Anspruch 1, **dadurch gekennzeichnet, dass** der Polyetheralkohol b3) mit Toluylendiamin gestartet ist.

21. Verfahren nach Anspruch 1, **dadurch gekennzeichnet, dass** der Polyetheralkohol b3) mit Trimethylolpropan gestartet ist.

22. Verfahren nach Anspruch 1, **dadurch gekennzeichnet, dass** der Polyetheralkohol b3) mit Glycerin gestartet ist.

23. Verfahren nach Anspruch 1, **dadurch gekennzeichnet, dass** das Treibmittel c) mindestens einen Kohlenwasserstoff enthält.

24. Verfahren nach Anspruch 1, **dadurch gekennzeichnet, dass** das Treibmittel c) mindestens einen aliphatischen Kohlenwasserstoff mit mindestens 4 Kohlenstoffatomen enthält.

25. Verfahren nach Anspruch 1, **dadurch gekennzeichnet, dass** das Treibmittel c) mindestens einen aliphatischen Kohlenwasserstoff mit mindestens 4 Kohlenstoffatomen und Wasser enthält.

26. Polyurethan-Hartschaumstoffe, herstellbar nach einem der Ansprüche 1 bis 25 .

## Claims

1. A process for producing rigid polyurethane foams by reacting
a) polyisocyanates with
b) compounds having at least two hydrogen atoms which are reactive toward isocyanate groups in the presence of
c) blowing agents,
wherein at least one graft polyol b1) which can be prepared by in-situ polymerization of olefinically unsaturated monomers in a polyether alcohol b1i), where the polyether alcohol b1i) has a functionality of from 2 to 4 and a hydroxyl number in the range from 100 to 250 mg KOH/g, its polyether chain comprises propylene oxide and up to 20% by weight, based on the polyether alcohol b1i), of ethylene oxide, and acrylonitrile and styrene in a weight ratio of acrylonitrile:styrene of from >1:1 to 4:1 are used as olefinically unsaturated monomers, is used as compounds having at least two hydrogen atoms which are reactive toward isocyanate groups b), and the reaction is carried out in the presence of at least one compound b1i) which has at least one olefinic double bond and is miscible with the polyether alcohol b1i).

2. The process according to claim 1, wherein the polyether alcohols b1i) are prepared by addition of alkylene oxides onto bifunctional to tetrafunctional alcohols.

3. The process according to claim 1, wherein the polyether alcohols b1i) are prepared by addition of alkylene oxides onto trifunctional to tetrafunctional alcohols.

4. The process according to claim 1, wherein the polyether chain of the polyether alcohols b1i) comprises up to 10% by weight, based on the polyether alcohol b1i), of ethylene oxide.

5. The process according to claim 1, wherein the polyether alcohols b1i) are prepared by addition of alkylene oxides onto toluenediamine.

6. The process according to claim 1, wherein the polyether alcohols b1i) are prepared by addition of alkylene oxides onto ethylenediamine.

7. The process according to claim 1, wherein the compound b1i) which has at least one olefinic double bond and is miscible with the polyether alcohol b1i) has a molecular weight of from 3000 to 30 000 g/mol.

8. The process according to claim 1, wherein the graft polyol b1) has a solids content of at least 35% by weight, based on the weight of the graft polyol b1).

9. The process according to claim 1, wherein the graft polyol b1) is prepared by polymerization of a mixture of acrylonitrile and styrene in a weight ratio of acrylonitrile:styrene of from 2:1 to 4:1.

10. The process according to claim 1, wherein the graft polyol b1) is prepared by polymerization of a mixture of acrylonitrile and styrene in a weight ratio of acrylonitrile:styrene of from > 3:1 to 5:1.

11. The process according to claim 1, wherein the graft polyol b1) has a hydroxyl number of 40-150 mg KOH/g.

12. The process according to claim 1, wherein the distribution of the graft polyol particles has a maximum in the range from 0.1 µm to 8 µm, preferably from 0.1 µm to 2 µm.

13. The process according to claim 1, wherein the graft polyol particles have a distinctly separated bimodal particle size.

14. The process according to claim 1, wherein the polyether alcohols b1ii) are prepared by addition of alkylene oxides onto bifunctional to octafunctional alcohols.

15. The process according to claim 1, wherein the polyether alcohols b1ii) are prepared by addition of alkylene oxides onto tetrafunctional to octafunctional alcohols.

16. The process according to claim 1, wherein the compound which has at least one olefinic double bond and is miscible with the polyether alcohol b1i) is a reaction product of a polyether alcohol b1ii) with an organic acid comprising at least one olefinic double bond, an organic acid anhydride comprising at least one olefinic double bond or an organic ester comprising at least one olefinic double bond.

17. The process according to claim 1, wherein the compound b1i) which has at least one olefinic double bond and is miscible with the polyether alcohol b1ii) is a reaction product of a polyether alcohol with an isocyanate comprising at least one olefinic double bond.

18. The process according to claim 1, wherein the compounds having at least two hydrogen atoms which are reactive toward isocyanate groups b) comprise from 10 to 25% by weight of the component b1), based on the weight of the component b).

19. The process according to claim 1, wherein the component b) comprises from 10 to 25% by weight of the component b1), from 25 to 65% by weight of a sucrose-initiated polyether alcohol b2) and from 10 to 40% by weight of a polyether alcohol b3) initiated by means of an aromatic amine or a trihydric alcohol.

20. The process according to claim 1, wherein the polyether alcohol b3) has been initiated by means of toluenediamine.

21. The process according to claim 1, wherein the polyether alcohol b3) has been initiated by means of trimethylolpropane.

22. The process according to claim 1, wherein the polyether alcohol b3) has been initiated by means of glycerol.

23. The process according to claim 1, wherein the blowing agent c) comprises at least one hydrocarbon.

24. The process according to claim 1, wherein the blowing agent c) comprises at least one aliphatic hydrocarbon having at least 4 carbon atoms.

25. The process according to claim 1, wherein the blowing agent c) comprises at least one aliphatic hydrocarbon having at least 4 carbon atoms and water.

26. A rigid polyurethane foam which can be produced according to any of claims 1 to 25.

## Revendications

1. Procédé de fabrication de mousses dures de polyuréthanne par réaction de
a) des polyisocyanates avec
b) des composés contenant au moins deux atomes d'hydrogène réactifs avec les groupes isocyanates en présence de
c) des agents gonflants,
**caractérisé en ce qu'**en tant que composés contenant au moins deux atomes d'hydrogène réactifs avec les groupes isocyanates b), au moins un polyol greffé b1) est utilisé, qui peut être fabriqué par polymérisation in situ de monomères oléfiniquement insaturés dans un polyétheralcool b1i), le polyétheralcool b1i) présentant une fonctionnalité de 2 à 4 et un indice hydroxyle compris entre 100 et 250 mg KOH/g, sa chaîne polyéther étant construite à partir d'oxyde de propylène et de jusqu'à 20 % en poids, par rapport au polyétheralcool b1i), d'oxyde d'éthylène, et l'acrylonitrile et le styrène étant utilisés en tant que monomères oléfiniquement insaturés en un rapport en poids acrylonitrile : styrène de > 1 : 1 à 4 : 1, et la réaction est réalisée en présence d'au moins un composé miscible avec le polyétheralcool b1i) contenant au moins une double liaison oléfinique b1ii).

2. Procédé selon la revendication 1, **caractérisé en ce que** les polyétheralcools b1i) sont fabriqués par addition d'oxydes d'alkylène sur des alcools bi- à tétrafonctionnels.

3. Procédé selon la revendication 1, **caractérisé en ce que** les polyétheralcools b1i) sont fabriqués par addition d'oxydes d'alkylène sur des alcools tri- à tétrafonctionnels.

4. Procédé selon la revendication 1, **caractérisé en ce que** la chaîne polyéther des polyétheralcools b1i) est construite à partir de jusqu'à 10 % en poids, par rapport au polyétheralcool b1i), d'oxyde d'éthylène.

5. Procédé selon la revendication 1, **caractérisé en ce que** les polyétheralcools b1i) sont fabriqués par addition d'oxydes d'alkylène sur de la toluylènediamine.

6. Procédé selon la revendication 1, **caractérisé en ce que** les polyétheralcools b1i) sont fabriqués par addition d'oxydes d'alkylène sur de l'éthylènediamine.

7. Procédé selon la revendication 1, **caractérisé en ce que** le composé miscible avec le polyétheralcool b1 i) contenant au moins une double liaison oléfinique b1ii) présente un poids moléculaire de 3 000 à 30 000 g/mol.

8. Procédé selon la revendication 1, **caractérisé en ce que** le polyol greffé b1) présente une teneur en solides d'au moins 35 % en poids, par rapport au poids du polyol greffé b1).

9. Procédé selon la revendication 1, **caractérisé en ce que** le polyol greffé b1) est fabriqué par polymérisation d'un mélange d'acrylonitrile et de styrène d'un rapport en poids acrylonitrile : styrène de 2 : 1 à 4 : 1.

10. Procédé selon la revendication 1, **caractérisé en ce que** le polyol greffé b1) est fabriqué par polymérisation d'un mélange d'acrylonitrile et de styrène d'un rapport en poids acrylonitrile : styrène de > 3 : 1 à 5 : 1.

11. Procédé selon la revendication 1, **caractérisé en ce que** le polyol greffé b1) présente un indice hydroxyle de 40 à 150mg KOH/g.

12. Procédé selon la revendication 1, **caractérisé en ce que** la dispersion des particules de polyol greffé présente un maximum entre 0,1 µm et 8 µm, de préférence 0,1 µm et 2 µm.

13. Procédé selon la revendication 1, **caractérisé en ce que** les particules de polyol greffé présentent une taille de particules bimodale fortement séparée.

14. Procédé selon la revendication 1, **caractérisé en ce que** les polyétheralcools b1ii) sont fabriqués par addition d'oxydes d'alkylène sur des alcools bi- à octafonctionnels.

15. Procédé selon la revendication 1, **caractérisé en ce que** les polyétheralcools b1ii) sont fabriqués par addition d'oxydes d'alkylène sur des alcools tétra- à octafonctionnels.

16. Procédé selon la revendication 1, **caractérisé en ce que** le composé miscible avec le polyétheralcool b1i) contenant au moins une double liaison oléfinique est un produit de réaction d'un polyétheralcool b1ii) avec un acide organique contenant au moins une double liaison oléfinique, un anhydride d'acide organique contenant au moins une double liaison oléfinique ou un ester organique contenant au moins une double liaison oléfinique.

17. Procédé selon la revendication 1, **caractérisé en ce que** le composé miscible avec le polyétheralcool b1i) contenant au moins une double liaison oléfinique b1ii) est un produit de réaction d'un polyétheralcool avec un isocyanate contenant au moins une double liaison oléfinique.

18. Procédé selon la revendication 1, **caractérisé en ce que** les composés contenant au moins deux atomes d'hydrogène réactifs avec les groupes isocyanate b) contiennent 10 à 25 % en poids du composant b1), par rapport au poids du composant b).

19. Procédé selon la revendication 1, **caractérisé en ce que** le composant b) est constitué de 10 à 25 % en poids du composant b1), 25 à 65 % en poids d'un polyétheralcool b2) démarré avec du saccharose, et 10 à 40 % en poids d'un polyétheralcool b3) démarré avec une aminé aromatique ou avec un alcool trivalent.

20. Procédé selon la revendication 1, **caractérisé en ce que** le polyétheralcool b3) est démarré avec de la toluylènediamine.

21. Procédé selon la revendication 1, **caractérisé en ce que** le polyétheralcool b3) est démarré avec du triméthylolpropane.

22. Procédé selon la revendication 1, **caractérisé en ce que** le polyétheralcool b3) est démarré avec de la glycérine.

23. Procédé selon la revendication 1, **caractérisé en ce que** l'agent gonflant c) contient au moins un hydrocarbure.

24. Procédé selon la revendication 1, **caractérisé en ce que** l'agent gonflant c) contient au moins un hydrocarbure aliphatique contenant au moins 4 atomes de carbone.

25. Procédé selon la revendication 1, **caractérisé en ce que** l'agent gonflant c) contient au moins un hydrocarbure aliphatique contenant au moins 4 atomes de carbone et de l'eau.

26. Mousses dures de polyuréthanne, pouvant être fabriquées selon l'une quelconque des revendications 1 à 25.
